# EUROPEAN PATENT APPLICATION

(11) **EP 4 586 349 A1**
(43) Date of publication of application: **16.07.2025**
(21) Application number: 24220918.7
(22) Date of filing: 18.12.2024
(51) Int. Cl.: H01M 10/04, H01M 50/211, H01M 50/264

(54) **BATTERY MODULE FOR A VEHICLE BATTERY PACK**

(30) Priority: 20.12.2023 IT 202300027390
(71) Applicant: FERRARI S.p.A., 41100 Modena (IT)
(72) Inventor: BALLATORE, Marco, 41100 Modena (IT); VENTURI, Enrico, 41100 Modena (IT); FAVARETTO, Fabrizio, 41100 Modena (IT)
(74) Representative: Studio Torta S.p.A.

(57) **Abstract**

A battery module (8) for a vehicle battery pack (7) configured to be installed in a road vehicle (1) with at least partial electric drive comprises an outer structure (9) delimiting an inner portion (10), two compression plates (11, 12) arranged at opposite ends (13, 14) of the portion (10), and one or more electrochemical cells (15) connected to one another and interposed between the plates (11, 12); at least part of the lateral surface (16) of each cell (15) is compressed by a compression force (F) along a compression direction (D) by the plates (11, 12); the plate (11) is movable relative to the plate (12) along the direction (D) so as to vary the relative distance (X) between the plates (11, 12); a device (17) adjusts the distance (X) so as to keep the force (F) equal to a predetermined value (Fn) constant during the life cycle of the electrochemical cells (15) .

## Description

### CROSS-REFERENCE TO RELATED APPLICATIONS

This patent application claims priority from Italian patent application no. 102023000027390 filed on December 20, 2023, the entire disclosure of which is incorporated herein by reference.

### TECHNICAL FIELD

The present invention refers to the field of energy storage systems in the automotive sector and in particular it relates to a battery module for a vehicle battery pack.

### PRIOR ART

Lithium batteries, in relation to their high energy density, increasingly allow the implementation of electric power in the automotive sector. Lithium polymers, in particular, currently represent, from a chemical point of view, the state of the art in the production of high-capacity batteries.

Solutions are known which provide for the interconnection in series and in parallel of several cells (generally, each of 3.7 V) to achieve the target total voltage and energy density for a vehicle battery pack.

The battery modules usually available on the market (not only the automotive one, but also that of consumer electronics) often consist of planar pouch batteries, which have a very limited thickness relative to the other dimensions. Two very wide opposite faces (through which the heat is almost integrally dissipated) are identified and four thin elongated sides are identified, wherein on one or two opposite sides, the positive and negative terminals of the cell are arranged.

Specifically, a known electric energy storage system for a vehicle having electric propulsion comprises a battery pack consisting of a plurality of battery modules electrically connected to one another. Each battery module comprises, in turn, a bulky support structure which carries a plurality of electrochemical cells electrically connected to one another in series and/or in parallel.

A known electric energy storage system further comprises an electric connector for connecting the electric energy storage system to the propulsion system of the vehicle having electric propulsion, and a control unit (normally called BMS - "Battery Management System") which interacts with all of the battery modules so as to control and manage each cell or sets of electrochemical cells of each battery module.

Alternatively, each battery module has a respective BMS connected in a centralized manner to a further control unit. Specifically, each electrochemical cell has a positive pole at an end and a negative pole at an opposite end (or at the same end) and the control unit (i.e. the BMS) is connected to each pole of the electrochemical cells so as to control the voltage values of each electrochemical cell.

Generally, the connection of the poles of the single electrochemical cells to the control unit occurs by means of a plurality of multipolar electric cables.

Each battery module further comprises two temperature sensors which are connected to the control unit by means of a corresponding electric cable for transmitting to the control unit a measurement of the internal temperature of the module (usually) in a couple of different areas.

Usually, to avoid unpleasant phenomena commonly known as "gassing", i.e. gas formation inside the individual cells due for example to the oxidation of the electrolyte or its chemical decomposition (often increased by phenomena such as overheating or overloading of the cells), the cells are kept in a state of constant compression. According to the prior art, such compression is provided by the support structure of each battery module, which is configured to compress the cells perpendicularly to the wide opposite faces. This compression is provided, for example, by strengthening the support structure and ensuring that at least two lateral walls act as tie rods in the compression. Consequently, each battery module is usually pre-assembled and subsequently installed in a further support structure integral with a portion of the vehicle frame, so as to keep the various modules in position without compromising the mutual connection thereof.

However, all this involves, especially in high-performance vehicles such as a sports car, an increase in the mass and dimensions necessary for the storage system, i.e. for the battery pack. Furthermore, the pre-assembly times of each battery module must be added to the normal assembly of the battery modules on the frame.

### DESCRIPTION OF THE INVENTION

The object of the present invention is to provide a battery module for a vehicle battery pack which is at least partially exempt from the drawbacks described above and, simultaneously, is simple and cost-effective to manufacture.

According to the present invention, a battery module for a vehicle battery pack is provided according to what is claimed by the appended claims.

The claims describe preferred embodiments of the present invention forming an integral part of the present description.

### BRIEF DESCRIPTION OF THE DRAWINGS

The present invention will now be described with reference to the accompanying drawings, which illustrate some non-limiting example embodiments thereof, wherein:
- Figure 1 is a schematic perspective view of a vehicle having electric propulsion comprising a battery pack provided with a battery module in accordance with the present invention;
- Figure 2 is a schematic perspective view of a first embodiment of a battery module for a vehicle having electric propulsion in accordance with the present invention;
- Figure 3 is a schematic perspective view of a second embodiment of a battery module for a vehicle having electric propulsion in accordance with the present invention; and
- Figure 4 is a graph illustrating the trend of the compression force of the battery module according to the embodiment of Figure 2.

### PREFERRED EMBODIMENTS OF THE INVENTION

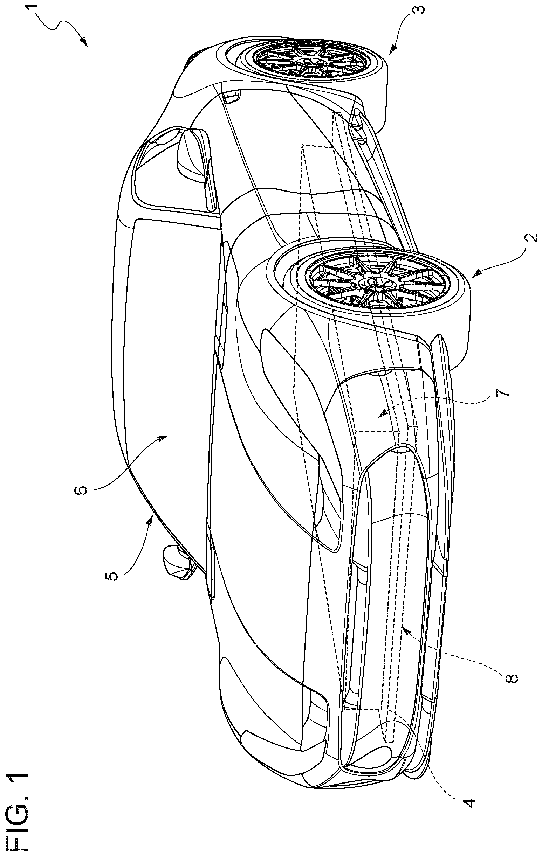

In Figure 1, reference numeral 1 indicates, as a whole, a road vehicle provided with two front wheels 2 and two rear wheels 3, of which at least one pair (or all) receive the torque from a power train (not illustrated).

The road vehicle 1 is a vehicle having an at least partially electric propulsion (i.e. hybrid or completely electric) and is provided with a frame 4 (schematically depicted). In other words, the power train can be hybrid (i.e. comprises an internal combustion heat engine and at least one electric motor), or electric (i.e. comprises only one or more electric motors).

The road vehicle 1 further comprises a body 5 defining a passenger compartment 6, which is configured to accommodate at least one driver and possibly one or more passengers.

The road vehicle 1 comprises a battery pack 7, supported by (mounted on) the frame 4. In particular, the battery pack 7 is arranged below the passenger compartment 6, in particular at a floor 8 of the road vehicle 1 (i.e. a vehicle bottom, which inferiorly delimits the road vehicle 1).

According to other non-limiting embodiments not illustrated, the battery pack is arranged behind a passenger compartment 6, behind seats contained inside the passenger compartment 6, inside an engine compartment.

In particular, the battery pack 7 is suitable for being connected to a power train (not illustrated) of the vehicle 1 having an at least partially electric propulsion and is adapted to accumulate the electric energy produced by an electric machine (not illustrated). The battery pack 7 is connected to the electric machine by means of the interposition of an electric energy converter (commonly known as inverter) which, on the basis of the different needs of the electric machine and of the battery pack 7 transforms the direct current exiting the battery pack 7 into alternating current for the electric machine, and vice versa.

The battery pack 7 comprises a plurality of battery modules 8, preferably identical to one another, arranged adjacent to one another to form the battery pack 7.

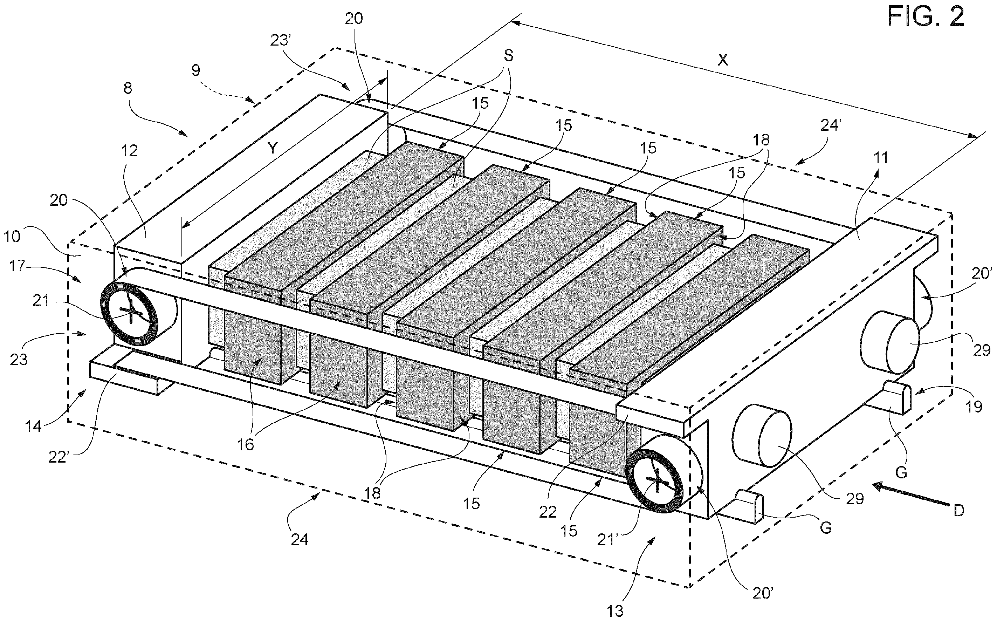

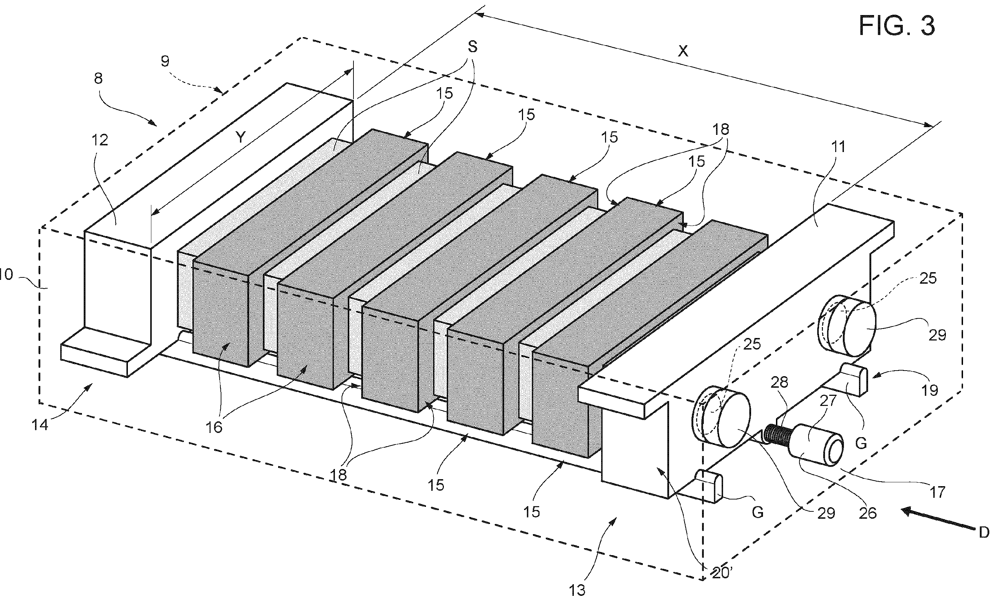

Each battery module 8 comprises an outer structure 9 (preferably box-like, as is schematically illustrated in the accompanying Figures 2 and 3) which delimits an inner portion 10 of the battery module 8.

The battery module 8 comprises a compression plate 11 and a compression plate 12, which are respectively arranged at opposite ends 13, 14 of the inner portion 10.

The battery module 8 comprises one or more electrochemical cells 15 electrically connected to one another and interposed between the compression plate 11 and the compression plate 12.

In particular, between one cell 15 and the other, as well as between the end cells 15 of the module and the compression plates 11,12, there is a separation foam S (or metal trays for dissipating heat) and/or recirculation channels for the passage of cooling fluid (not illustrated).

The electrochemical cells 15 each comprise a lateral surface 16; at least part of the lateral surface 16 is compressed by a compression force F exerted along at least one compression direction D by the compression plates 11, 12. In fact, the electrochemical cells 15 must be kept in a state of constant compression to guarantee the correct and efficient operation of the module 8 and thus of the battery pack 7. In other words, the entire module 8 is subjected to a given state of compression, the magnitude of which mainly depends on the characteristics of the cells 15.

The compression plate 11 is movable relative to the compression plate 12 along the compression direction D so as to vary the relative distance X between the compression plates 11, 12.

The module 8 comprises an adjusting device 17 configured to adjust the relative distance X between the compression plates 11, 12, so as to keep the compression force F equal to a predetermined value Fn constant during the life cycle of the electrochemical cells 15. In other words, the adjusting device 17 keeps the pre-load of the cells 15, and thus the state of compression of the module 8, constant during the life cycle of the battery 7.

The operation of the device remains unvaried in the case where the plate 12 is movable relative to the compression plate 11 along the compression direction D so as to vary the relative distance X between the compression plates 11, 12. Also in this case, the adjusting device 17 adjusts the relative distance X between the compression plates 12, 11.

At a practical level, during the life cycle of the battery 7, the movable plate 11 (or 12) can translate in response to a possible increase in pressure of the cell 15 which would cause the body of the cell 15 to expand, in order to restore the correct level of compression of the module 8.

Preferably, as is illustrated by the non-limiting embodiments of Figures 2 and 3, the electrochemical cells 15 are planar pouch electrochemical cells, the lateral surface 16 of which comprises two main faces 18 opposite to each other, respectively. The electrochemical cells 15 are arranged so that the main faces 18 of adjacent cells 15 are parallel to each other and parallel to the compression plates 11, 12. The adjusting device 17 further comprises a linear guiding device 19, for guiding the displacement of the movable compression plate 11 (or 12) along the compression direction D. The compression direction D is transverse, in particular perpendicular, to the main faces 18 of the cells 15.

According to the non-limiting embodiment illustrated, the guiding device 19 comprises two linear guides G identical to each other, arranged parallel to each other and to the direction D and at a predetermined distance from each other, in particular less than a width Y of the compression plates 11, 12. According to other embodiments, the linear guiding device 19 is any type of slide or runner guide, or another type of sliding coupling along a predetermined compression direction D.

Advantageously but not limitedly, according to a first embodiment of the present invention, the adjusting device 17 comprises at least one constant-force spring 20 having a fixed end 21 and a free end 22.

The constant-force spring 20, or spiral spring, is a particular type of traction spring consisting of a strip of sheet metal curved in a spiral, so that each turn adheres to the internal one. Specifically, when the strip of sheet metal is extended (deflected), the intrinsic stress resists the load force (as in a standard traction spring), but in an almost constant percentage, in particular tending to zero. In other words, such a spring exerts a constant returning force within a certain range of displacement. The spring is normally mounted with the inner diameter of the spiral wound on a pin, which constitutes the fixed end 21, and with the free end 22 connected to the load force.

In the case illustrated by Figure 2, the fixed end 21 is constrained to the (fixed) compression plate 12 and the free end is constrained to the compression plate 11, which is movable to allow the relative movement between the compression plate 11 and the compression plate 12, while the compression force F is kept equal to the constant predetermined value Fn. According to another possible configuration, the fixed end 22 is connected to the movable plate 11, i.e. to the load, while the movable end 21 is connected to the fixed plate 12.

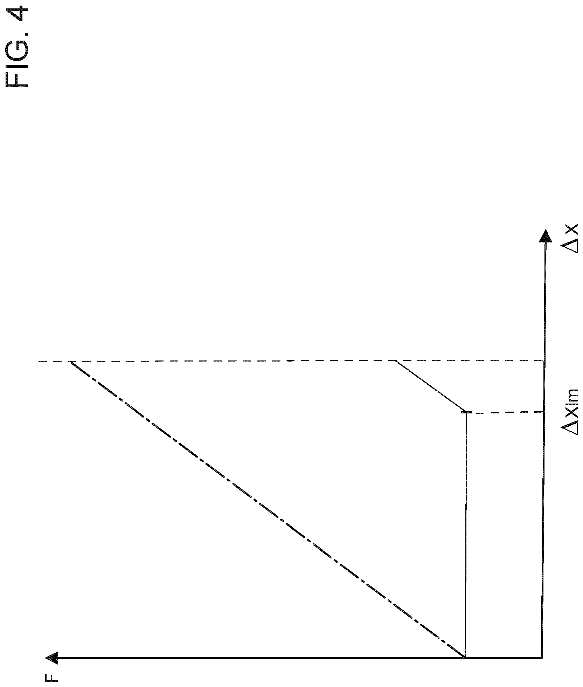

When, during its life cycle, the electrochemical cell 15 undergoes an increase in internal pressure and its body expands, the plate 11 translates on the guides G and the spring 20 is subject to an elongation while the force it exerts remains substantially equal to the preset value Fn during the assembly/design phase of the module 8. After a given elongation, in particular when the limit displacement value ΔXlm is reached, as is illustrated by the graph of Figure 4, the spring 20 is saturated, i.e. it can no longer keep its constant characteristic.

According to some non-limiting embodiments not illustrated, the compression plate 11 and the compression plate 12 are both movable. In this case, the two plates 11, 12 are free to translate on the guides G and the variation of the relative distance X between the plates can be determined by the combination of their movements along the compression direction D.

Advantageously but not limitedly, whether only one plate 11 (or 12) or both plates 11, 12 are movable, the adjusting device 17 comprises a pair 23 of constant-force springs 20 and 20'. A fixed end 21 of the spring 20 and a free end 22' of the spring 20' are constrained to the plate 12; a fixed end 21' of the spring 20' and a free end 22 of the spring 20 are constrained at the compression plate 11. In other words, the two springs 20 and 20' are arranged parallel to each other to connect the two plates 11,12, thereby causing a compression of the electrochemical cells 15.

According to the preferred but non-limiting embodiment illustrated in Figure 2, the adjusting device 17 comprises two pairs 23, 23' of constant-force springs. Each pair 23, 23' comprises two springs 20, 20' arranged on opposite sides 24, 24' of the battery module 8. Each pair 23, 23' comprises a respective spring 20 and a respective spring 20'. A fixed end 21 of the respective spring 20 and a free end 22' of the respective spring 20' are constrained to the plate 12; a fixed end 21' of the respective spring 20' and a free end 22 of the respective spring 20 are constrained at the compression plate 11.

This symmetrical configuration allows a balance of forces and allows higher pressures to be exerted thanks to the use of a greater number of springs arranged in parallel. For very high pressures, it would also be possible to use one or two springs with a width equal to that of the module 8, in particular equal to a width Y of the compression plates 11, 12; specifically, a spring is placed on the upper face and a spring on the lower face of the module 8. Thereby, all the available space is exploited to obtain high compression states of the module 8, when required by the application.

Advantageously but not limitedly, according to a second embodiment of the present invention illustrated in Figure 3, the adjusting device 17 comprises a force sensor 25 arranged between the compression plate 11 and/or the compression plate 12 and the electrochemical cells 15, to detect an actual (current) value of the compression force F. In particular, as is illustrated in Figure 3, the adjusting device 17 comprises two force sensors 25 arranged between the compression plate 11 and/or the compression plate 12 and the electrochemical cells 15. More in particular, the force sensors 25 are load cells, for example button load cells, available in small sizes, adapted to be installed inside battery modules 8.

The adjusting device 17 comprises an actuator device 26 for actuating at least the plate 11 along the compression direction D. The actuator device 26 is configured to vary the relative distance X between the plates 11, 12 according to the actual value of the compression force F so as to keep the actual value of the compression force equal to the predetermined value Fn. According to some variations, the device 26 also actuates the plate 12; in some cases, there are at least two actuator devices 26, one for each plate 11, 12.

Preferably but not limitedly, the actuator device 26 comprises an electric gearmotor 27 and a worm gear 28. The electric gearmotor 27 rotatably actuates the worm gear 28, according to the actual value of compression force F. In other words, based on the state of actual compression of the cells 15, the magnitude of the displacement of the plate 11 is adjusted, so as to keep the state of compression of the module 8 constant. In essence, the compression of the module 8 is controlled in an open loop.

Generally, such an electro-actuated system therefore comprises a control unit (not illustrated) which receives a signal from the force sensor 25 indicative of the actual value of the compression force F and controls the electric gearmotor 27 according to the signal.

Advantageously but not limitedly, the adjusting device 17 comprises at least one end-stop device 29 for stopping the plate 11 and/or the plate 12 when a limit stroke value is reached. In particular, in the embodiments illustrated in Figures 2 and 3, the plate 11 is movable and two end-stop devices 29 are arranged on the outer wall of the plate 11. More in particular, the devices 29 are rubber pads. According to some variations, when the plate 11 is fixed and the plate 12 is movable, the end-stop devices 29 are arranged on the plate 11. According to some variations, if both plates are movable, the end-stop devices 29 are arranged on both plates 11, 12.

Specifically, according to the first embodiment of the present invention, as is illustrated by the graph of Figure 4, when the spring 20 (or 20') reaches saturation for the displacement value equal to ΔXlm, the pads 29 come into contact with an inner wall, not illustrated, of the outer structure 9 of the module 8 and, thanks to their elastic nature, determine a linear trend of the force F. In particular, upon reaching the saturation of the spring, the constant trend of the curve is interrupted and the displacement ΔX and the force F become linearly proportional to each other. In other words, once the spring is unblocked, the behaviour of the device 17 is that typical of generic traction springs, depicted in Figure 4 by the dashed line.

Although the invention described above particularly refers to some very precise embodiment examples, it is not to be considered limited to such embodiment examples, falling within its scope all the variations, modifications or simplifications covered by the appended claims, such as for example a different shape of the battery pack 7, a different placing thereof, a different shape of the battery module 8, of the compression plates 11, 12, a different type of electrochemical cells 15, a different conformation of the springs 20, 20', a different type of linear guiding devices 19, of actuator device 16, of end-stop device 29 or of force sensors 25, etc.

The present invention has many advantages.

Firstly, it allows keeping the electrochemical cells of the battery module in a state of constant compression without the need to strengthen the bearing structure of the module, and therefore without weighing down the module 8 and the battery pack.

Furthermore, by keeping the pressure constant thanks to the adjusting device 17, the present invention guarantees the maximum efficiency of the cells and therefore of the battery module 8 during the entire life cycle of the battery.

Furthermore, the present invention, thanks to the use of the adjusting device, guarantees the correct pre-loading of the electrochemical cells without a substantial increase in dimensions and without an increase in the complexity of the assembly procedures of the module. On the contrary, thanks to the adjustment of the relative position of the compression plates, the insertion of the cells in the single module is facilitated.

A further advantage of the present invention, in particular in the second embodiment, lies in the possibility of actively controlling the state of compression of the cells with appropriate force sensors and adjusting it accordingly.

In conclusion, the present invention allows keeping the efficiency of the electrochemical cells without an increase in the mass and dimensions of the battery pack and without an increase in the pre-assembly times of each battery module.

### LIST OF THE REFERENCE NUMERALS Of THE FIGURES

- 1: vehicle
- 2: front wheels
- 3: rear wheels
- 4: frame
- 5: body
- 6: passenger compartment
- 7: battery pack
- 8: battery module
- 9: outer structure
- 10: inner portion
- 11: compression plate
- 12: compression plate
- 13: end
- 14: end
- 15: electrochemical cells
- 16: lateral surface
- 17: adjusting device
- 18: main faces
- 19: guiding device
- 20, 20': constant-force spring
- 21, 21': fixed end
- 22, 22': free end
- 23, 23': pair of springs
- 24, 24': side
- 25: force sensor
- 26: actuator device
- 27: electric gearbox
- 28: worm gear
- 29: end-stop device
- F: compression force
- D: compression direction
- X: relative distance
- Fn: predetermined value
- ΔX: displacement
- ΔXlm: limit displacement
- Y: compression plate width

## Claims

1. A battery module (8) for a vehicle battery pack (7) configured to be installed in a road vehicle (1) with at least partial electric drive; the battery module (8) comprising:
an outer structure (9) delimiting an inner portion (10) of the battery module (8);
a first compression plate (11) and a second compression plate (12), which are arranged at opposite ends (13, 14) of the inner portion (10);
one or more electrochemical cells (15) electrically connected to one another and interposed between the first compression plate (11) and the second compression plate (12); the electrochemical cells (15) each comprising a lateral surface (16), wherein at least part of said lateral surface (16) is compressed by a compression force (F) exerted along at least one compression direction (D) by the first compression plate (11) and the second compression plate (12);
the battery module (8) being **characterised in that** the first compression plate (11) is movable relative to the second compression plate (12) along the compression direction (D) so as to vary the relative distance (X) between the first compression plate (11) and the second compression plate (12);
wherein the battery module (8) comprises an adjusting device (17) configured to adjust the relative distance (X) between the first compression plate (11) and the second compression plate (12) so as to keep the compression force (F) equal to a predetermined value (Fn) constant during the life cycle of the electrochemical cells (15).

2. The battery module (8) according to claim 1, wherein, the electrochemical cells (15) are planar pouch electrochemical cells (15) whose lateral surface (16) comprises two main faces (18) opposite to each other respectively; the electrochemical cells (15) are arranged so that the main faces (18) of adjacent electrochemical cells (15) are parallel to each other and parallel to the first compression plate (11) and the second compression plate (12); wherein, the adjusting device (17) comprises a linear guiding device (19) for guiding the displacement of at least the first movable compression plate (11) along the at least one compression direction (D), wherein the at least one compression direction (D) is transverse, in particular perpendicular, to the main faces (18).

3. The battery module (8) according to claim 1 or 2, wherein the adjusting device (17) comprises at least one constant-force spring (20) having a fixed end (21) and a free end (22), wherein the fixed end (21) is constrained to the second compression plate (12) and the free end (22) is constrained to the first compression plate (11), which is movable to allow relative movement between the first compression plate (11) and the second compression plate (12), while the compression force (F) is kept equal to the constant predetermined value (Fn).

4. The battery module (8) according to claim 3, wherein the first compression plate (11) and the second compression plate (12) are both movable.

5. The battery module according to claim 3 or 4, wherein the adjusting device (17) comprises a pair (23) of constant-force springs (20, 20'), the pair (23) comprising a first spring (20) and a second spring (20'), wherein a fixed end (21) of the first spring and a free end (22') of the second spring (20') are constrained to the second compression plate (12); and a fixed end (21') of the second spring (20') and a free end (22) of the first spring (20) are constrained at the first compression plate (11).

6. The battery module (8) according to claim 3 or 4, wherein the adjusting device (17) comprises two pairs (23, 23') of constant-force springs, each pair (23, 23') comprising a first spring (20) and a second spring (20') arranged on opposite sides (24, 24') of the battery module (8), wherein each pair (23, 23') comprises a respective first spring (20) and a respective second spring (20'), wherein a fixed end (21) of the respective first spring (20) and a free end (22) of the respective second spring (20') are constrained to the second compression plate (12); and a fixed end (21') of the respective second spring (20') and a free end (22) of the respective first spring (20) are constrained at the first compression plate (11).

7. The battery module (8) according to claim 1 or 2, wherein the adjusting device (17) comprises:
a force sensor (25) arranged between one of the first compression plate (11) and/or the second compression plate (12) and the electrochemical cells (15), for detecting an actual value of the compression force (F); and
an actuator device (26) for actuating at least the first plate (11) along the compression direction (D);
wherein the actuator device (26) is configured to vary the relative distance (X) between the first compression plate (11) and the second compression plate (12) according to the actual value of the compression force (F) so as to keep the actual value of the compression force (F) equal to the predetermined value (Fn).

8. The battery module (8) according to claim 7, wherein the actuator device (26) comprises an electric gearmotor (27) and a worm gear (28), wherein the electric gearmotor (27) rotatably actuates the worm gear (28) according to the actual value of compression force (F).

9. The battery module (8) according to any one of the preceding claims, wherein the adjusting device (17) comprises at least one end-stop device (29) for stopping the first plate (11) and/or the second plate (12) when a limit stroke value is reached.

10. A vehicle battery pack (7) comprising at least one battery module (8) according to any one of claims 1 to 9.

11. **A** road vehicle (1) comprising:
four wheels (2, 3), of which at least one pair of drive wheels;
an electric or hybrid drive train configured to deliver power to the drive wheels;
wherein the drive train comprises a battery pack (7) according to claim 10.
